# EUROPÄISCHE PATENTANMELDUNG

(11) **EP 1 336 691 A1**
(43) Veröffentlichungstag der Anmeldung: **20.08.2003**
(21) Anmeldenummer: 02017867.9
(22) Anmeldetag: 09.12.1997
(51) Int. Cl.: E03C 1/05

(54) **Sanitäre Näherungsarmatur**

(30) Priorität: 10.12.1996 DE 19651132
(62) Teilanmeldung aus: 97952904.7
(71) Anmelder: Ideal-Standard GmbH & Co. OHG, 53121 Bonn (DE)
(72) Erfinder: Bergmann, Konrad, Dr.-Ing., 54292 Trier (DE)
(74) Vertreter: Gesthuysen, von Rohr & Eggert

(57) **Zusammenfassung**

Dargestellt und beschrieben ist eine sanitäre Näherungsarmatur (1) mit einer zugeordneten, eine Sensoreinrichtung (9) aufweisenden Steuereinrichtung (8) und einer mit der Steuereinrichtung (8) gekoppelten Ventileinrichtung (10), wobei die Steuereinrichtung (8) nach Erfassung eines Signals durch die Sensoreinrichtung (9) von der einen Seite die Ventileinrichtung (10) zur Freigabe von kälterem Wasser ansteuert, während die Steuereinrichtung (8) nach Erfassung eines Signals durch die Sensoreinrichtung von der anderen Seite die Ventileinrichtung (10) zur Freigabe von wärmerem Wasser ansteuert.

Erfindungsgemäß ist vorgesehen, daß ein von der Sensoreinrichtung erfaßtes Signal nur dann von der Steuereinrichtung an die Ventileinrichtung zur Ventilbetätigung weitergegeben wird, wenn ein vorgegebener Signalschwellwert überschritten wird, und der Signalschwellwert größer ist als der von dem Wasserstrahl der Näherungsarmatur erzeugte Signalwert. Damit wird eine verbesserte Verläßlichkeit der Auslösung der Steuereinrichtung geschaffen.

## Beschreibung

Die Erfindung betrifft eine sanitäre Näherungsarmatur mit einer zugeordneten, eine Sensoreinrichtung aufweisenden Steuereinrichtung und einer mit der Steuereinrichtung gekoppelten Ventileinrichtung, wobei die Steuereinrichtung nach Erfassen eines Signals durch die Sensoreinrichtung die Ventileinrichtung zur Wasserfreigabe ansteuert.

Eine Näherungsarmatur der eingangs genannten Art ist bereits aus der Praxis bekannt. Die bekannten Näherungsarmaturen, die im industriellen und öffentlichen Bereich eingesetzt werden, haben gegenüber manuell betätigbaren Armaturen verschiedene Benutzungsvorteile, die auch im privaten Bereich von Interesse sind, nämlich
- berührungslose Bedienung
- Wasser- und Energieersparnis
- leichte Reinigung.

Andere Vorteile sind nur im kommerziellen und industriellen Bereich gegeben, nämlich
- Sicherheit gegen Vandalismus
- Wasserersparnis durch Selbstschluß nach einem vorgegebenen Zeitintervall
- Vermeidung von Infektionen.

Obwohl Näherungsarmaturen schon seit langer Zeit im kommerziellen und industriellen Bereich verwendet werden, sind sie im privaten Bereich nicht verbreitet. Einer der Gründe dafür, daß sich Näherungsarmaturen im privaten Bereich bisher nicht durchsetzen konnten, besteht in der vergleichsweise schlechten Handhabung, wenn abwechselnd warmes und kaltes Wasser benötigt wird. Herkömmliche Näherungsarmaturen weisen hierzu einen manuell zu betätigenden Umschaltmechanismus auf und müssen von Hand umgestellt werden, wodurch die Vorteile des berührungslosen Einschaltens wieder aufgehoben werden. Die Bedienung zum Umschalten benötigt dabei mehr Zeit als beispielsweise bei einem Hebelmischer.

Außerdem werden im privaten Bereich häufig Bedienungsfunktionen vom privaten Nutzer benötigt, die mit den bekannten Näherungsarmaturen nicht realisiert werden können, wie beispielsweise die Möglichkeit, zur üblichen Selbstschlußfunktion eine längere Laufzeit für das Wasser wählen oder auch die Armatur ganz abschalten zu können. Darüber hinaus besteht ein systembedingter Nachteil von Näherungsarmaturen, unabhängig davon, ob sie im kommerziellen und industriellen oder im privaten Bereich eingesetzt werden, darin, daß ihre Funktion häufig nicht sicher genug ist, da die Sensoreinrichtung durch Verschmutzung oder durch andere äußere Einflüsse gestört werden kann. Schließlich können auch Veränderungen der elektrischen Bauteile zu Fehlfunktionen führen.

Aufgabe der vorliegenden Erfindung ist es, eine Näherungsarmatur der eingangs genannten Art zur Verfügung zu stellen, die den üblicherweise im privaten Bereich gestellten Gebrauchsanforderungen entspricht und außerdem sicher und ohne Fehlfunktionen funktioniert.

Diese Aufgabe ist erfindungsgemäß bei einer sanitären Näherungsarmatur der eingangs genannten Art dadurch gelöst, daß die Steuereinrichtung nach Erfassung eines Signals von der einen Seite die Ventileinrichtung zur Freigabe von kälterem Wasser ansteuert, während die Steuereinrichtung nach Erfassung eines Signals von der anderen Seite die Ventileinrichtung zur Freigabe von wärmerem Wasser ansteuert. Durch die Erfindung wird damit im Ergebnis eine Richtungserkennung der Steuer- bzw. Sensoreinrichtung zur Verfügung gestellt, die dazu genutzt wird, entweder Kaltwasser oder aber Heiß- bzw. Warmwasser zu schalten. Üblicherweise wird bei Erfassen eines Signals von rechts das Kaltwasserventil angesteuert, während bei Erfassen eines Signals von links Heiß- bzw. Warmwasser geschaltet wird. Das warme Wasser ist dabei auf die im privaten Bereich üblicherweise am häufigsten verwendete warme Temperatur vorgemischt, wobei auf bekannte mechanische, thermostatische Mischertechniken bei der Ventileinrichtung zurückgegriffen werden kann.

Weitere Merkmale, Vorteile und Anwendungsmöglichkeiten der vorliegenden Erfindung ergeben sich aus den Unteransprüchen, der nachfolgenden Beschreibung von Ausführungsbeispielen anhand der Zeichnung und der Zeichnung selbst.

Es zeigt
- Fig. 1: eine Seitenquerschnittsansicht einer erfindungsgemäßen Näherungsarmatur,
- Fig. 2: eine Seitenansicht einer weiteren Ausführungsform der erfindungsgemäßen Näherungsarmatur und
- Fig. 3: eine Unteransicht auf die Näherungsarmatur aus Fig. 1.

Die in den Figuren dargestellte sanitäre Näherungsarmatur 1 weist einen Armaturenkörper 2 mit einem Armaturengehäuse 3 auf. Der Armaturenkörper 2 ist mit einem Armaturensockel 4 und mit einem etwa horizontal verlaufenden Auslaufarm 5 versehen. Die Näherungsarmatur 1 ist im dargestellten Ausführungsbeispiel an einem im einzelnen nicht näher dargestellten Waschbecken 6 befestigt und weist eine im Armaturenkörper 2 geführte Betätigungsstange 7 zur Betätigung eines nicht dargestellten Auslaufschließers des Waschbeckens 6 auf.

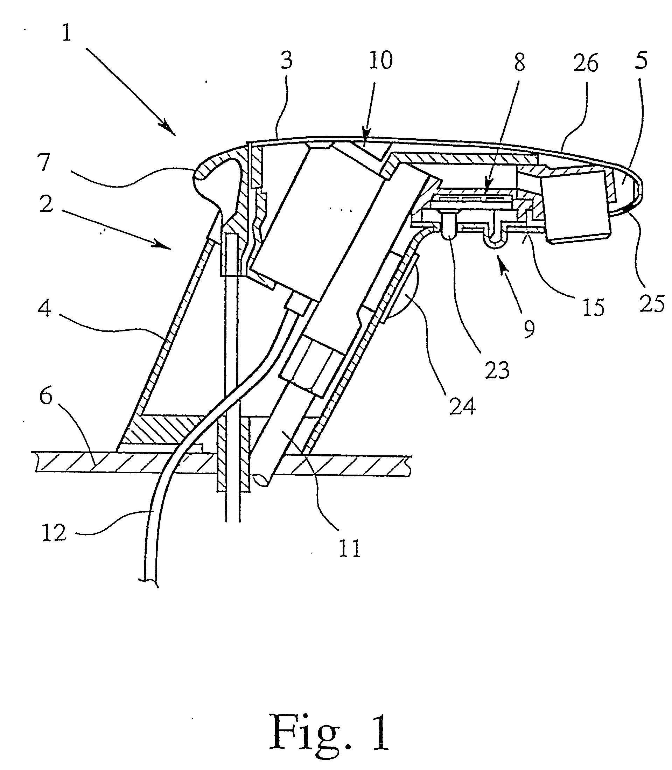

Weiterhin ist die sanitäre Näherungsarmatur 1 mit einer Steuereinrichtung 8 versehen, die wiederum eine Sensoreinrichtung 9 aufweist. Die Steuereinrichtung 8 ist mit einer Ventileinrichtung 10 gekoppelt, die zur Wasserfreigabe von Kalt- und Heißwasser sowie ggf. zur Temperatur- und zur Mengensteuerung dient. Die Ventileinrichtung 10 kann jeweils ein nicht im einzelnen beschriebenes motorbetriebenes Ventil zur Steuerung des Kalt- und Warmwasserdurchflusses aufweisen und weiterhin mit einem Thermostaten versehen sein. Es kann aber auch die übliche Mischtechnik mit Ventilscheiben, die über entsprechende Stellantriebe verschoben werden, zur Anwendung kommen. In jedem Falle wird aber über die Ventileinrichtung 10 der Wasserzufluß aus einer Kaltwasser- und/oder Heißwasserleitung geregelt. In Fig. 1 ist lediglich die Kaltwasserleitung 11 dargestellt.

Die Steuereinrichtung 8, die Sensoreinrichtung 9 und die Ventileinrichtung 10 sind vorliegend batteriebetrieben. Hierzu ist ein entsprechend mit der Ventileinrichtung 10 verbundener, zu einer nicht dargestellten Batterie führender Anschluß 12 vorgesehen, wobei die Batterie beispielsweise im unteren Bereich des Waschbeckens 6 an dessen Unterseite angeordnet sein kann.

Die Betriebsweise der sanitären Näherungsarmatur 1 ist nun derart, daß die Steuereinrichtung 8, bei der es sich um einen Mikroprozessor handelt, nach Erfassung eines Signals durch die Sensoreinrichtung 9 die Ventileinrichtung 10 zur Wasserfreigabe ansteuert. Der Unterschied zum Stand der Technik besteht nun darin, daß durch die Steuereinrichtung 8 bzw. die Sensoreinrichtung 9 eine Richtungserkennung möglich ist, je nach dem, ob ein Signal von der einen oder der anderen Seite erfaßt wird. Diese Richtungserkennung ist bei der Erfindung derart umgesetzt, daß die Steuereinrichtung 8, nachdem ein Signal bei Annäherung eines Körpers, wie einer Hand, von der einen Seite durch die Sensoreinrichtung 9 erfaßt worden ist, die Ventileinrichtung 10 zur Freigabe von kälterem Wasser ansteuert, während die Steuereinrichtung 8 nach Erfassung eines Signals bei Annäherung einer Hand von der anderen Seite die Ventileinrichtung 10 zur Freigabe von wärmerem Wasser ansteuert. Dieses grundsätzliche Prinzip der Richtungserkennung ist bei der in den Figuren dargestellten Ausführungsform konkret derart realisiert, daß die Steuereinrichtung 8 bei Erfassen eines Signals von rechts die Ventileinrichtung 10 zur Öffnung eines Kaltwasserventils ansteuert, während die Steuereinrichtung 8 nach Erfassung eines Signals von links die Ventileinrichtung 10 zur Öffnung des Kaltwasserventils und eines Heißwasserventils zur Erzielung von Warmwasser vorgegebener Temperatur ansteuert. Das nicht dargestellte Kaltwasserventil ist ebenso wie das nicht dargestellte Warmwasserventil Teil der Ventileinrichtung 10.

Zur Gewährleistung eines ordnungsgemäßen Betriebes der erfindungsgemäßen sanitären Näherungsarmatur 1 ist vorgesehen, daß die Steuereinrichtung 8 derart ausgebildet ist, daß die nach Erfassen des ersten Signals zuerst eingestellte erste Ventilstellung der Ventileinrichtung 10 unabhängig von der Erfassung darauf folgender Signale, beispielsweise bei Erfassung von Signalen von der anderen Seite, für ein vorgegebenes erstes Zeitintervall beibehalten wird. Hierdurch wird sichergestellt, daß bei der Benutzung die ursprünglich eingestellte Wassertemperatur nicht ständig durch Auslösung anderer Signale verstellt wird.

Von der Handhabung her ist es dabei besonders vorteilhaft, wenn die zuerst eingestellte erste Ventilstellung für ein vorgegebenes weiteres Zeitintervall beibehalten wird, wenn kurz vor oder nach Ablauf des ersten oder eines weiteren Zeitintervalls ein Signal von der Sensoreinrichtung 9 erfaßt wird, und zwar unabhängig davon, ob dieses Signal von der einen oder der anderen Seite erfaßt wird. Die Steuereinrichtung 8 kann dabei vorzugsweise derart ausgebildet sein, daß eine Änderung der ersten Ventilstellung durch Erfassung von Signalen über die Sensoreinrichtung 9 erst möglich ist, wenn das oder die Ventile der Ventileinrichtung 10 nach Ablauf des ersten oder eines weiteren Zeitintervalls in die Schließstellung zurückgestellt worden ist bzw. sind.

Zum einwandfreien Funktionieren der sanitären Näherungsarmatur 1 ist weiterhin vorgesehen, daß ein von der Senoreinrichtung 9 erfaßtes Signal nur dann von der Steuereinrichtung 8 an die Ventileinrichtung 10 zur Ventilbetätigung weitergegeben wird, wenn ein vorgegebener Signalschwellwert überschritten wird. Dieser Signalschwellwert sollte größer sein als der von dem Wasserstrahl beim Betrieb der Näherungsarmatur 1 erzeugte Signalwert, so daß sich kein unerwünschter Dauerbetrieb der Näherungsarmatur 1 durch ständige Signalauslösung aufgrund des Wasserstrahls ergibt.

Bei einer besonders einfachen Ausgestaltung der Sensoreinrichtung 8 weist diese zwei Sensoren 13, 14 auf, von denen der eine Sensor 13 zur Erfassung eines Signals von der rechten Seite, der andere Sensor 14 zur Erfassung eines Signals von der linken Seite vorgesehen ist. Die Sensoren 13, 14 sind dabei abgedichtet im Armaturenkörper 2 der Näherungsarmatur 1 im Bereich des Auslaufarms 5, und zwar an dessen Unterseite 15 vorgesehen. Die Anbringung der Sensoren 13, 14 an der Unterseite 15 des Auslaufarms 5 verhindert eine übermäßige Verschmutzung der Sensoren 13, 14. Auch wird die Wahrscheinlichkeit einer absichtlichen Beschädigung der Sensoren 13, 14 wegen der verdeckten Anordnung weitgehend verringert.

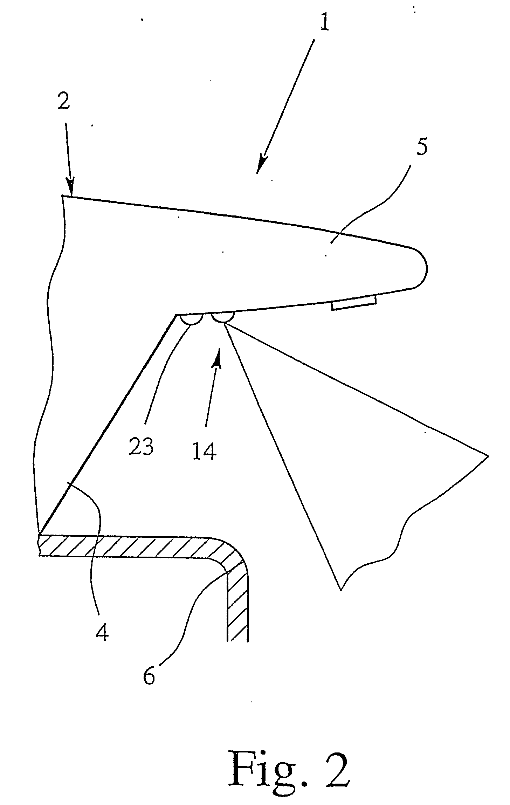

Die an der Unterseite 15 des Auslaufarms 5 angeordneten Sensoren 13, 14 sind derart nach unten gerichtet im Armaturenkörper 2 angeordnet, daß im Einbauzustand der Näherungsarmatur 1, wie dies beispielsweise in Fig. 2 dargestellt ist, von dem Waschbecken 6 ein sogenanntes Referenzsignal erzeugt und von der Steuereinrichtung 8 zur Abgleichung der relativen Empfindlichkeit der Sensoren 13, 14 untereinander verwendet wird. Hierdurch ergibt sich die Möglichkeit, bei Nichtbenutzung der Näherungsarmatur 1 einen Abgleich der Sensorsignale zu erhalten. Es ist festgestellt worden, daß, wenn ein Abgleich nicht ständig vorgenommen wird, es nicht möglich ist, über längere Zeit die Einschaltzonen der Sensoren 13, 14 für warm und kalt an gleicher Stelle zu halten. Um eine sichere Richtungserkennung zu erhalten, ist im dargestellten Ausführungsbeispiel folgende Auswertung des Abgleichs vorgesehen:

Wird die sanitäre Näherungsarmatur 1 nicht benutzt, werden ständig in zeitlich vorgegebenen, vorzugsweise periodischen Abständen die Reflektionswerte des Sensors 13 und des Sensors 14 ermittelt. Die Signale der Sensoren 13, 14 werden verstärkt und von einem nicht dargestellten Analog-Digital-Wandler der Steuereinrichtung 8 in z. B. 512 Schritten aufgelöst. Es versteht sich, daß natürlich auch eine höhere oder aber auch eine geringere Auflösung verwendet werden kann. Die Signalschwellwerte für die Aktivierung der Ventileinrichtung 10 werden in einem festen Verhältnis zu den Reflektionssignalen festgelegt. Dieser Faktor bzw. dieses Verhältnis kann z. B. zwei betragen. Nur solche Signale, die von der Sensoreinrichtung 9 erfaßt werden und um das vorgegebene Verhältnis größer sind als die Ruhesignale, führen zu einer Aktivierung der Näherungsarmatur 1.

Durch die ständige Erneuerung der Ruhesignalwerte der Sensoren 13, 14 bleibt der Schaltpunkt für die beiden Seiten, d. h. für rechts und links, stets symmetrisch zur Mitte der Sensoreinrichtung 9 orientiert. Auch der Abstand zum Auslauf der Näherungsarmatur 1 ist hierdurch festgelegt. Änderungen der Empfindlichkeit der einzelnen Meßkreise von kalt und warm haben keinen Einfluß. Des weiteren können Beeinträchtigungen durch Driften der elektronischen Bauteile, Änderungen der Versorgungsspannung und Verschmutzungen der Sensoren 13, 14 so eliminiert werden. Weichen die Ruhesignale zu sehr voneinander ab, kann ein akustisches und/oder optisches Wartungssignal über eine im einzelnen nicht dargestellte Anzeigeeinrichtung der Näherungsarmatur 1 gegeben werden.

Die erfindungsgemäße Sensoreinrichtung 9 zeichnet sich vorliegend durch eine besonders einfache Ausgestaltung aus. Im dargestellten Ausführungsbeispiel sind die Sensoren 13, 14 als Infrarotsensoren ausgebildet, wobei zwei Empfangsdioden 16, 17 und nur eine zwischen den Empfangsdioden 16, 17 angeordnete Sendediode 18 vorgesehen sind. Der Sensor 13 wird dabei von der Empfangsdiode 16 und der Sendediode 18 gebildet, während der Sensor 14 von der Empfangsdiode 17 und der Sendediode 18 gebildet wird.

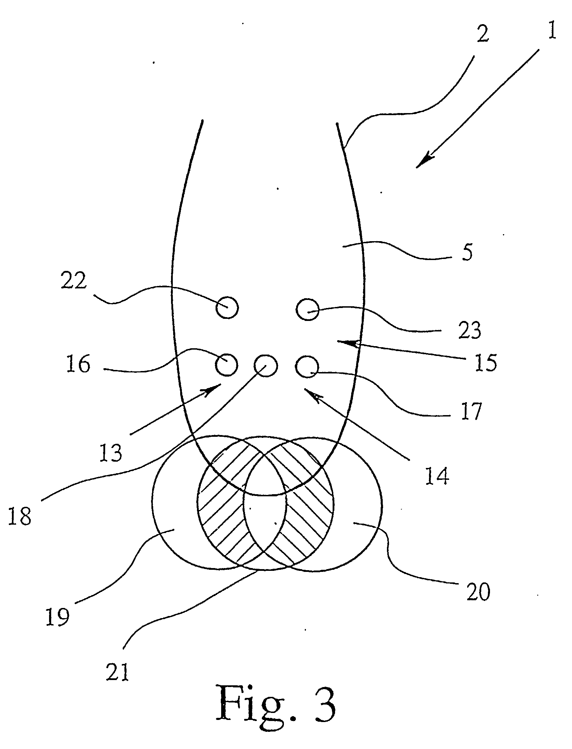

In Fig. 3 sind die Empfangskeulen 19, 20 der Empfangsdioden 16, 17 sowie die Sendekeule 21 der Sendediode 18 dargestellt. In den Bereichen, in denen sich die Empfangskeulen 19, 20 mit der Sendekeule 21 überschneiden, führt das Erfassen eines Signals bei Überschreiten des Signalschwellwertes zu einer Aktivierung der sanitären Näherungsarmatur 1. Die Ausrichtung der aus dem Auslaufarm 5 herausragenden Empfangsdioden 16, 17 und der Sendediode 18 sollte 45° ± 15° nach vorn betragen und zwar, wie bereits beschrieben, derart, daß das Waschbecken 6 angestrahlt wird und so die zuvor erwähnten Ruhesignale zur Abgleichung der beiden Sensoren 13, 14 verwendet werden können. Es darf darauf hingewiesen werden, daß es natürlich auch möglich ist, daß die Sensoren 13, 14 bzw. die Empfangsdiode 16, 17 und die Sendediode 18 direkt nach unten auf das Waschbecken 6 oder aber beispielsweise auf den Armaturensockel 4 gerichtet sein können, um den zuvor beschriebenen Abgleich zu erzielen.

Um den Handhabungskomfort und die Bedienungsmöglichkeiten der Näherungsarmatur 1 weiter zu verbessern, sind am Armaturenkörper 2, und zwar im Bereich der Sensoren 13, 14, zwei mit der Steuereinrichtung 8 gekoppelte Bedienelemente 22, 23 vorgesehen. Hierbei handelt es sich um zwei Tasten bzw. Druckschalter. Die Bedienelemente 22, 23 sind wie auch die Empfangsdioden 16, 17 und die Sendediode 18 an der Unterseite 15 des Auslaufarms 5 vorgesehen und ragen über die Unterseite 15 hinaus. Sie sind in gleicher Weise wie die Empfangsdioden 16, 17 und die Sendediode 18 gegenüber dem Auslaufarm 5 abgedichtet. Die Anordnung der Bedienelemente 22, 23 an der Unterseite 15 des Auslaufarms 5 bringt genau die gleichen Vorteile, die sich auch durch die Anordnung der Empfangsdioden 16, 17 und die Sendediode 18 an der Unterseite 15 des Auslaufarms 5 ergeben und auf die zuvor bereits hingewiesen worden ist. Obwohl im dargestellten Ausführungsbeispiel die Bedienelemente 22, 23 hinter den Sensoren 13, 14 angeordnet sind, könnte auch eine Anordnung vor den Sensoren 13, 14 gewählt werden. Dies hat beispielsweise den Vorteil, daß in einfacher Weise eine Betätigung beider Bedienelemente 22, 23 möglich ist, ohne daß die Näherungsarmatur 1 über die Sensoreinrichtung 9 aktiviert wird.

Die Bedienelemente 22, 23 sind vor allem bei Anwendung der sanitären Näherungsarmatur 1 im privaten Bereich wichtig. Bei Betätigung des rechten Bedienelements 22 wird die Ventileinrichtung 10 zur Öffnung des Kaltwasserventils für ein vorgegebenes Zeitintervall angesteuert, während bei Betätigung des linken Bedienelementes 23 die Ventileinrichtung 10 zur Öffnung des Kaltwasserventils und des Heißwasserventils für ein vorgegebenes Zeitintervalls zur Erzielung von Warmwasser vorgegebener Temperatur angesteuert wird. Die durch die Bedienelemente 22, 23 eingestellte Ventilstellung wird erst dann wieder deaktiviert, wenn das vorgegebene Zeitintervall, beispielsweise eine Minute, abgelaufen ist oder aber durch Betätigen desselben oder auch des anderen Bedienelementes 22, 23 innerhalb des Zeitintervalls.

Des weiteren ist bei der dargestellten Ausführungsform vorgesehen, daß bei gleichzeitiger Betätigung beider Bedienelemente 22, 23 die Sensoreinrichtung 9 deaktiviert wird. Dies ist deshalb wichtig, damit beim Reinigen des Waschbeckens 6 und/oder der sanitären Näherungsarmatur 1 verhindert wird, daß die Sensoreinrichtung 9 ständig anspricht. Nach ihrer Deaktivierung wird die Sensoreinrichtung 9 nach einer vorgegebenen Zeit automatisch wieder aktiviert. Alternativ oder in Kombination dazu kann auch vorgesehen sein, daß die Sensoreinrichtung 9 durch Betätigung wenigstens eines Bedienelements 22, 23 wieder aktiviert wird.

Bei privater Nutzung können die Bedienelemente 22, 23 auch zur Bedienung bzw. Aktivierung der Näherungsarmatur 1 herangezogen werden, wenn ein Defekt an der Sensoreinrichtung 9 vorliegen sollte.

Bei der zuvor beschriebenen sanitären Näherungsarmatur 1 ist es so, daß diese eine konstante Durchflußmengenrate hat, also eine vorbestimmte Menge an Wasser nach Aktivierung geliefert wird. Auch die Temperatur des Warmwassers hat einen bestimmten vorgegebenen Wert. Um sowohl die Temperatur des Warmwassers als auch die Menge ändern zu können, kann sowohl zur Temperatureinstellung des Warmwassers als auch zur Mengeneinstellung des zu liefernden Wassers jeweils ein Einstellelement vorgesehen sein. Ein Temperatureinstellelement 24 ist in Fig. 1 dargestellt.

Wie sich aus Fig. 1 ergibt, ist das Armaturgehäuse 2 zweiteilig ausgebildet; es weist einen nach oben hin geöffneten Gehäuseteil 25 und einen darauf aufsetzbaren Dekkel 26 auf. Diese Zweiteiligkeit des Armaturengehäuses 2 hat den Vorteil, daß es hierdurch in besonders einfacher Weise möglich ist, die Sensoreinrichtung 9 und ggf. auch die Steuereinrichtung 8 im Hohlraum des Auslaufarms 5 anzuordnen. Im Reparatur- und Wartungsfall ist hierdurch eine gute und einfache Zugänglichkeit gegeben. Es versteht sich natürlich, daß der Deckel 26 gegenüber dem Gehäuseteil 25 nach dem Aufsetzen entsprechend abgedichtet ist.

Des weiteren kann bei der Näherungsarmatur 1 eine nicht näher dargestellte Anzeigeeinrichtung zur Anzeige der eingestellten Wassertemperatur vorgesehen sein, wobei es sich anbietet, entsprechende Leuchtdioden im Deckel 26 oder zwischen dem Deckel 26 und dem Armaturenkörper 2 anzuordnen.

Die erfindungsgemäße sanitäre Näherungsarmatur 1 kann natürlich auch im nicht-privaten Bereich eingesetzt werden. Ist die Steuerung von zwei Temperaturen hierbei nicht erwünscht, so können die zwei Sensoren redundant arbeiten und damit die Betriebssicherheit erheblich steigern. Insbesondere ist eine Erkennung von Sensorstörungen möglich, bevor die Näherungsarmatur ihre Funktion einstellt. Eine Wartung kann daher rechtzeitig erfolgen. In der vorgenannten Anwendung lösen Überschreitungen des Signalschwellwertes des einen oder des anderen Sensors stets die gleiche Temperatur aus.

## Patentansprüche

1. Sanitäre Näherungsarmatur (1) mit einer zugeordneten, eine Sensoreinrichtung (9) aufweisenden Steuereinrichtung (8) und einer mit der Steuereinrichtung (8) gekoppelten Ventileinrichtung (10), wobei die Steuereinrichtung (8) nach Erfassung eines Signals durch die Sensoreinrichtung (9) von der einen Seite die Ventileinrichtung (10) zur Freigabe von kälterem Wasser ansteuert, während die Steuereinrichtung (8) nach Erfassung eines Signals durch die Sensoreinrichtung (9) von der anderen Seite die Ventileinrichtung (10) zur Freigabe von wärmerem Wasser ansteuert, **dadurch gekennzeichnet, daß** ein von der Sensoreinrichtung (9) erfaßtes Signal nur dann von der Steuereinrichtung (8) an die Ventileinrichtung (10) zur Ventilbetätigung weitergegeben wird, wenn ein vorgegebener Signalschwellwert überschritten wird, und der Signalschwellwert größer ist als der von dem Wasserstrahl der Näherungsarmatur (1) erzeugte Signalwert.

2. Sanitäre Näherungsarmatur nach Anspruch 1, **dadurch gekennzeichnet, daß** die Steuereinrichtung (8) nach Erfassung eines Signals von der einen Seite die Ventileinrichtung (10) zur Öffnung eines Kaltwasserventils ansteuert, während die Steuereinrichtung (8) nach Erfassung eines Signals von der anderen Seite die Ventileinrichtung (10) zur Öffnung eines Heißwasserventils und ggf. des Kaltwasserventils zur Erzielung von Warmwasser vorgegebener Temperatur ansteuert.

3. Näherungsarmatur nach Anspruch 1 oder 2, **dadurch gekennzeichnet, daß** die Sensoreinrichtung (9) wenigstens zwei Sensoren (13, 14) aufweist, von denen der eine Sensor (13) zur Erfassung eines Signals von der einen Seite und der andere Sensor (14) zur Erfassung eines Signals von der anderen Seite vorgesehen ist.

4. Näherungsarmatur nach Anspruch 3, **dadurch gekennzeichnet, daß** die Sensoren (13, 14) abgedichtet im Armaturenkörper (2) der Näherungsarmatur (1) im Bereich eines Auslaufarms (5), vorzugsweise an dessen Unterseite (15) angeordnet sind.

5. Näherungsarmatur nach Anspruch 3 oder 4, **dadurch gekennzeichnet, daß** die Sensoren (13, 14) derart nach unten gerichtet im Armaturenkörper (2) angeordnet sind, daß im Einbauzustand der Näherungsarmatur (1) von einem Waschbecken (6) ein Signal erzeugt, von der Sensoreinrichtung (9) erfaßt und von der Steuereinrichtung (8) zur Abgleichung der relativen Empfindlichkeit der Sensoren (13, 14) untereinander verwendet wird und daß, vorzugsweise, eine ständige Abgleichung der Sensoren (13, 14) in zeitlich vorgegebenen Abständen erfolgt.

6. Näherungsarmatur nach einem der Ansprüche 3 bis 5, **dadurch gekennzeichnet, daß** die Sensoren (13, 14) als Infrarotsensoren ausgebildet sind und daß, vorzugsweise, zwei Empfangsdioden (16, 17) und nur eine, vorzugsweise zwischen den Empfangsdioden (16, 17) angeordnete Sendediode (18) vorgesehen ist.

7. Näherungsarmatur nach einem der Ansprüche 1 bis 6, **dadurch gekennzeichnet, daß** am Armaturenkörper (2), im Bereich der Sensoren (13, 14) an der Unterseite (15) eines Auslaufarms (5), mindestens zwei mit der Steuereinrichtung (8) gekoppelte Bedienelemente (22, 23), beispielsweise in Form von tastenartigen Druckschaltern, vorgesehen sind und daß, vorzugsweise, bei Betätigung eines Bedienelements (22) die Ventileinrichtung (10) zur Öffnung des Kaltwasserventils für ein vorgegebenes Zeitintervall angesteuert wird, während bei Betätigung eines anderen Bedienelements (23) die Ventileinrichtung (10) zur Öffnung des Heißwasserventils und ggf. des Kaltwasserventils für ein vorgegebenes Zeitintervall zur Erzielung von Warmwasser vorgegebener Temperatur angesteuert wird.

8. Näherungsarmatur nach Anspruch 7, **dadurch gekennzeichnet, daß** durch Betätigen desselben oder eines Bedienelementes (22, 23) innerhalb des Zeitintervalls die Ventileinrichtung (10) in die Schließstellung zurückgestellt wird.

9. Näherungsarmatur nach Anspruch 7 oder 8, **dadurch gekennzeichnet, daß** bei gleichzeitiger Betätigung beider Bedienelemente (22, 23) die Sensoreinrichtung (9) deaktiviert wird und daß, vorzugsweise, die Sensoreinrichtung (9) nach ihrer Deaktivierung nach einer vorgegebenen Zeitdauer oder durch Betätigung wenigstens eines Bedienelementes (22, 23) wieder einschaltbar ist.

10. Näherungsarmatur nach einem der Ansprüche 7 bis 9, **dadurch gekennzeichnet, daß** wenigstens ein weiteres Bedienelement, vorzugsweise in Form eines tastenartigen Druckschalters und/oder eines Drehschalters, zur Einstellung der Menge des Wassers und/oder der Temperatur des Warmwassers vorgesehen ist.

11. Näherungsarmatur nach einem der Ansprüche 1 bis 10, **dadurch gekennzeichnet, daß** ein Armaturgehäuse (3) zumindest zweiteilig ausgebildet ist und einen nach oben hin geöffneten Gehäuseteil (25) und einen darauf aufsetzbaren Deckel (26) aufweist und daß, vorzugsweise, die Sensoreinrichtung (9) und ggf. die Steuereinrichtung (8) in einem Auslaufarm (5) angeordnet sind.

12. Näherungsarmatur nach einem der Ansprüche 1 bis 11, **dadurch gekennzeichnet, daß** eine vorzugsweise Leuchtdioden aufweisende Anzeigeeinrichtung zur Anzeige der eingestellten Wassertemperatur vorgesehen ist.
